(19) Europäisches Patentamt
European Patent Office
Office européen des brevets

(11) **EP 4 606 649 A1**

(12) **EUROPÄISCHE PATENTANMELDUNG**

(43) Veröffentlichungstag:
**27.08.2025 Patentblatt 2025/35**

(21) Anmeldenummer: **25156533.9**

(22) Anmeldetag: **07.02.2025**

(51) Internationale Patentklassifikation (IPC):
**B60R 1/06** (2006.01)

(52) Gemeinsame Patentklassifikation (CPC):
**B60R 1/0605**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **20.02.2024 DE 102024104718**

(71) Anmelder: **MEKRA LANG GmbH & Co. KG
91465 Ergersheim (DE)**

(72) Erfinder:
• **Popp, Albrecht
91629 Weihenzell (DE)**
• **Finkenberger, Elmar
91587 Adelshofen (DE)**
• **Snel, Jan
91465 Ergersheim (DE)**

(74) Vertreter: **Winter, Brandl - Partnerschaft mbB
Alois-Steinecker-Straße 22
85354 Freising (DE)**

(54) **TRAGSTRUKTUR MIT HOHLEM NECK-BEREICH UND VERFAHREN ZUM HERSTELLEN EINES HOHLRAUMS IM STEG EINER TRAGSTRUKTUR MIT ROHR- ODER BECHERFÖRMIGEM, DIE TRAGENDE FUNKTION AUSSCHLIESSLICH ÜBERNEHMENDEM KUNSTSTOFFKÖRPER**

(57) Die Erfindung betrifft eine Tragstruktur (1) für ein indirektes Sichtsystem (2) für ein Fahrzeug (3), mit einem ersten Anbindungsbereich (4) zum Befestigen einer ersten Reflexionseinheit (6) sowie einem dazu versetzten zweiten Anbindungsbereich (5) zum Befestigen einer zweiten Reflexionseinheit (7), wobei die Tragstruktur (1) wenigstens eine Schnittstelle (8, 9) zur Anbringung an dem Fahrzeug (3) besitzt, wobei die Tragstruktur (1) zwischen dem ersten Anbindungsbereich (4) und dem zweiten Anbindungsbereich (5) einen Steg (10) besitzt, wobei der Steg (10) als becher- oder rohrförmiger, die tragende Funktion ausschließlich / in Alleinstellung übernehmender Kunststoffkörper ausgestaltet ist und sich der Hohlraum (12) im Kunststoffkörper durch den für einen Fahrer (19) des Fahrzeugs (3) sichtbaren Bereich (S1) erstreckt. Die Erfindung betrifft auch ein Verfahren zum Herstellen des Hohlraums (12) im Steg (10) dieser Tragstruktur (1), wobei ein Kunststoffverarbeitungsverfahren eingesetzt ist.

*Fig. 1*

EP 4 606 649 A1

**Beschreibung**

Die Erfindung betrifft eine Tragstruktur für ein indirektes Sichtsystem für ein vorzugsweise landgebundenes Kraftfahrzeug / Fahrzeug, wie ein Nutzfahrzeug, beispielsweise einen Bus, einen Lkw oder einen Transporter, mit einem ersten Anbindungsbereich bspw. unter Zwischenschaltung von Verstelleinheiten zum Befestigen einer ersten Reflexionseinheit, wie einer ersten Spiegeleinrichtung, aufweisend ein erstes Spiegelgehäuse und einen ersten Spiegel sowie einen dazu versetzten zweiten Anbindungsbereich bspw. unter Zwischenschaltung von Verstelleinheiten zum Befestigen einer zweiten Reflexionseinheit, wie einer zweiten Spiegeleinrichtung, aufweisend ein zweites Spiegelgehäuse und einen zweiten Spiegel, wobei die Tragstruktur wenigstens eine Schnittstelle zur (direkten oder indirekten) Anbringung an dem Fahrzeug besitzt, beispielsweise an einem vor der Befestigung am Fahrzeug freien Ende der Tragstruktur oder an beiden vor der Befestigung am Fahrzeug freien Enden der Tragstruktur, wobei die Tragstruktur zwischen dem ersten Anbindungsbereich und dem zweiten Anbindungsbereich einen Steg besitzt.

Tragstrukturen sind grundsätzlich schon aus dem Stand der Technik bekannt.

So offenbart beispielsweise die DE 10 2011 087 539 B3 eine Verbindungsstruktur zur Verbindung von Komponenten einer mehrteiligen Tragstruktur für Kraftfahrzeugspiegel, mit einem ersten Strukturteil, das einen Verbindungszapfen aufweist, wobei der Verbindungszapfen eine Längsachse, eine Zapfenbasis und ein freies Ende von wenigstens einem Bajonettzapfen umfasst und wobei der wenigstens eine Bajonettzapfen außen an dem Verbindungszapfen zwischen dem freien Ende und der Zapfenbasis angeordnet ist, und einem zweiten Strukturteil, das einen wenigstens einseitig offenen, rohrförmigen Verbindungsabschnitt umfasst, der dem Verbindungszapfen komplementär zugeordnet ist, wobei der Verbindungsabschnitt eine Längsachse, ein der Zapfenbasis zugeordnetes freies Ende, an den freien Enden des Verbindungszapfens zugeordnetes inneres Ende, wenigstens einen axial verlaufenden Montagekanal und wenigstens einen zwischen dem freien Ende und dem inneren Ende angeordneten Bajonettkanal, mit dem der wenigstens eine Bajonettzapfen in Eingriff bringbar ist, umfasst. Als besonders ist in diesem Patent herausgestellt, dass der wenigstens eine Bajonettkanal eine geradlinig verlaufende Führungsfläche aufweist, die im spitzen Winkel zu der Längsachse verläuft.

Aus der WO 97/35221 A1 ist auch ein Rückspiegel mit zwei motorisch verstellbaren Spiegeln bekannt. Dabei wird auf eine Tragstruktur gesetzt, die als metallisches Rohr ausgebildet ist.

Ein ähnlicher Aufbau ist auch aus der DE 10 2005 053 002 B4 bekannt. Dort ist für die Anmelderin ein Außenspiegel für Kraftfahrzeuge, insbesondere für Nutzfahrzeuge patentiert, mit einem bügelförmigen Haltearm zum Befestigen des Außenspiegels an einem Fahrzeug, mit einem ersten und einem zweiten Ende und einem zwischen den beiden Enden verlaufenden Abschnitt zur Befestigung wenigstens eines Spiegelkopfs mittels einer Verbindungseinrichtung, und wenigstens einem Spiegelelement, das in dem wenigstens einen Spiegelkopf angeordnet ist. Dort ist als besonders herausgestellt, dass der Haltearm an beiden Enden an dem Fahrzeug befestigbar ist, der Haltearm in dem zwischen den beiden Enden verlaufenden Abschnitt einen von der Kreisform abweichenden Querschnitt aufweist, eine dem Spielgelkopf zugewandte Montagefläche aufweist, die plan oder konvex ist und eine von dem Spiegelkopf abgewandte Seite aufweist, die konvex ist. Dabei ist es bedeutsam, dass die Verbindungseinrichtung nur an der dem Spiegelkopf zugewandten Montagefläche des Haltearms anliegt.

Darüber hinaus sind auch Lageranordnungen zur schwenkbaren Lagerung eines indirekten Sichtsystems sowie solch indirekte Sichtsysteme aus der EP 2 942 235 B1 bekannt.

Tragarme für Fahrzeugspiegel sind ferner aus der EP 1 531 084 B1 bekannt. Dabei wird auf einen Steg gesetzt, der ein metallisches Rohr umfasst, dessen oberes bzw. unteres Ende fest mit einem oberen bzw. unteren Haltearm verbunden ist.

Zudem ist aus der US 2021/053492 A1 eine Seitenspiegelanordnung mit einem sichtbaren, hohl ausgebildeten Steg zwischen zwei Anbindungsbereichen bekannt.

Die aus dem Stand der Technik bekannten Lösungen sind jedoch noch verbesserbar. Es ist daher die Aufgabe der vorliegenden Erfindung, die aus dem Stand der Technik bekannten Nachteile abzustellen oder wenigstens zu mildern und eine gewichtsreduzierte stabile Lösung zur Verfügung zu stellen. Gleichzeitig sollen auch noch Kostenvorteile gezeigt werden.

Die Aufgabe wird durch eine Tragstruktur mit den Merkmalen des Anspruchs 1 gelöst. Zudem wird die Aufgabe durch ein Verfahren mit den Merkmalen des nebengeordneten Anspruchs gelöst. Vorteilhafte Weiterbildungen sind Gegenstand der Unteransprüche.

Insbesondere wird die Aufgabe durch eine Tragstruktur für ein indirektes Sichtsystem für ein Fahrzeug gelöst, mit einem ersten Anbindungsbereich zum Befestigen einer ersten Reflexionseinheit, einem dazu (im am Fahrzeug montierten Zustand in Vertikalrichtung) versetzten zweiten Anbindungsbereich zum Befestigen einer zweiten Reflexionseinheit, wenigstens einer Schnittstelle zur Anbringung an dem Fahrzeug, und mindestens einem zwischen dem ersten Anbindungsbereich und dem zweiten Anbindungsbereich ausgebildeten Steg, wobei der Steg rohrförmig ausgebildet ist und einen Hohlraum bildet, wobei die Tragstruktur vorzugsweise derart ausgebildet ist, dass der Steg in einem an der Tragstruktur montierten Zustand der ersten Reflexionseinheit und der zweiten Reflexionseinheit abschnittsweise/ in einem (sichtbaren) Bereich für einen Fahrer des Fahrzeugs sichtbar ist, wobei der Steg vollständig als Kunststoffkörper ausgestaltet ist und als alleinige Tragstruktur zwischen dem ersten Anbindungsbereich und dem zweiten Anbindungsbereich dient.

Gemäß einer bevorzugten Ausführungsform kann der Kunststoffkörper aus einem Thermoplast ausgebildet sein. Der Kunststoffkörper kann auch faserverstärkt, beispielsweise glasfaserverstärkt oder kohlefaserverstärkt ausgebildet sein. So kann eine geeignete Festigkeit auch ohne metallische Ausbildung gewährleistet werden.

Gemäß einer bevorzugten Ausführungsform kann der Steg metallfrei ausgebildet sein. Dabei können Anbauteile wie Schrauben, Klammern, Ösen oder Haken an dem Steg anbracht sein (die jedoch nicht zur tragenden Struktur des Stegs beitragen).

Zudem betrifft die Erfindung ein indirektes Sichtsystem für ein Fahrzeug, mit der Tragstruktur und einer ersten Reflexionseinheit, die an dem ersten Anbindungsbereich angebracht ist, sowie einer zweiten Reflexionseinheit, die an dem zweiten Anbindungsbereich angebracht ist. Die erste, insbesondere obere Reflexionseinheit ist vorzugsweise ein Spiegel. Die zweite, insbesondere untere Reflexionseinheit ist vorzugsweise ein Weitwinkelspiegel. Beispielsweise können die erste Reflexionseinheit und die zweite Reflexionseinheit voneinander beabstandet sein, so dass ein (dazwischenliegender) Abschnitt des Stegs der Tragstruktur für den Fahrer sichtbar ist. Insbesondere kann das indirekte Sichtsystem eingerichtet sein, als Rückblickvorrichtung zu dienen. Insbesondere kann das indirekte Sichtsystem eingerichtet sein, außerhalb des Fahrzeugs angebracht zu werden. Insbesondere kann das indirekte Sichtsystem eingerichtet sein, an einer A-Säule des Fahrzeugs bzw. in Fahrrichtung vor einem Fenster einer Fronttür des Fahrzeugs angebracht zu werden.

Mit anderen Worten wird diese Aufgabe bei einer gattungsgemäßen Tragstruktur dadurch gelöst, dass der Steg als becher- oder rohrförmiger, die tragende Funktion ausschließlich / in Alleinstellung übernehmender Kunststoffkörper ausgestaltet ist und der Hohlraum im Kunststoffkörper sich durch den (gesamten) für einen Fahrer des Fahrzeugs sichtbaren Bereich (S1) erstreckt (oder Teile davon). Natürlich ist es möglich diesen wenigstens im Bereich S1 vorhandenen Kunststoffkörper auch abzudecken, so dass er selber nicht optisch wahrnehmbar ist, also sichtverdeckt angeordnet ist, etwa über eine teilweise oder vollständig den Kunststoffköper umgebende Abdeckung.

Das Gewicht des Gesamtspiegels wird durch Ersetzen möglichst vieler oder gar aller Metallteile durch Kunststoff erreicht. Während bei den bisherigen Lösungen Metall allerdings zur tragenden Funktion benötigt wurde, kann nun bei einer erfindungsgemäßen Gestaltung auf Metallrohrbügel oder mit Kunststoff umspritzte Metallrohre verzichtet werden. Die Entwicklung einer leichten, stabilen Tragstruktur, vorzugsweise vollständig aus Kunststoff, die eine gute direkte Sicht des Fahrers gewährleistet und deren Gewicht im Vergleich zu den bestehenden Lösungen bei gleichbleibender Stabilität reduziert ist, ist die Folge.

Mit anderen Worten besteht die Lösung darin, dass eine Tragstruktur für ein indirektes Sichtsystem für ein Fahrzeug zur Verfügung gestellt wird. Sie besitzt einen ersten Anbindungsbereich, an dem eine erste Reflexionseinheit befestigbar ist oder befestigt ist. Sie besitzt auch einen zweiten Anbindungsbereich, an dem eine zweite Reflexionseinheit befestigbar ist oder befestigt ist. Wenigstens eine Schnittstelle ist vorhanden, die direkt und/oder indirekt, beispielsweise über Spiegelfüße, Schwenkmechanismen und/oder Rasten, eine Verbindung zum Fahrzeug sicherstellt. Die Tragstruktur besitzt wenigstens einen Steg zwischen dem ersten Anbindungsbereich und dem zweiten Anbindungsbereich. Besonders ist es, dass der Steg wenigstens teilweise aus einem hohlen, rohrförmigen (länglichen) Kunststoffkörper gebildet ist. Dieser Kunststoffkörper kann auch als Faserverbundwerkstoffkörper ausgestaltet sein. Er kann somit durch Füllstoff(e) verstärkte(n) Kunststoff(e) beinhalten. Zum Beispiel bieten sich Anteile von Glasfaser, Kohlefaser und/oder Aramid, insbesondere Poly(p-phenylenterephthalamid) und/ oder Polyamide, und/ oder Polybutylenterephthalat, an. All dies erleichtert es auf Metallrohre zu verzichten, insbesondere auf umspritzte Metallrohre zu verzichten.

Ein besonderer Aspekt ist darauf gerichtet, dass in Richtung des ersten Anbindungsbereichs und des zweiten Anbindungsbereichs zumindest teilweise ein offenes Ende vorhanden ist. Der Steg hingegen besitzt eine tragende Funktion. Somit ist der Steg aus Kunststoff im sichtbaren Bereich, d.h. in einem Bereich S1, jener Abschnitt, der die ausschließliche Tragfunktion übernimmt. Es sei erwähnt, dass der Kunststoffkörper einen offenen Hohlkörper beinhaltet / definiert und nach Art eines Bechers mit oder ohne Boden ausbildbar ist, wobei im Falle des Vorhandenseins eines Bodens, dieser mit einem Loch und/oder einem Durchbruch versehen ist, insbesondere einem Durchgangsloch.

Vorteilhafte Ausführungsformen sind in den Unteransprüchen beansprucht und werden nachfolgend näher erläutert.

So ist es von Vorteil, wenn der Steg in Richtung des ersten Anbindungsbereichs und/oder in Richtung des zweiten Anbindungsbereichs auf einer oder beiden Seiten zumindest teilweise offen / durchgängig ausgestaltet ist, also zum Beispiel zumindest ein offenes Ende bzw. einen innen offenen Übergang zur restlichen, stegfernen Tragstruktur besitzt. Auf diese Weise kann die Fertigung vereinfacht werden, insbesondere, wenn auf einen Schiebereinsatz des Fertigungsverfahrens gesetzt wird. Der Steg geht im Übergangsbereich in die restliche Tragstruktur über. Das Ende kann daher auch in die restliche Tragstruktur eingebettet sein.

Gemäß einer bevorzugten Ausführungsform kann der Steg als Rohr mit Boden oder als Rohr oder ohne Boden ausgestaltet sein, wobei in dem Boden ein Durchgangsloch ausgebildet ist. Das heißt, dass es zweckmäßig ist, wenn der Steg als Becher oder Rohr mit oder ohne Boden / Schott ausgestaltet ist, wobei im Falle des Bodens oder des Schotts ein Durchgangsloch / Loch dort vorhanden ist. Bei Fehlen des Bodens / Schotts oder Vorhandensein des Durchgangsloches, lassen sich beispielsweise Kabel einfach über die ganze Länge des Steges im Inneren desselben (entlang / hindurch) führen.

Wenn die Oberfläche des Stegs sichtbar ist, das heißt ohne Abdeckung versehen ist, oder zumindest (nur) teilweise von einem Gehäuse umschlossen ist, so lässt sich auf ästhetische Anforderungen gezielt reagieren. Die Abwesenheit einer Abdeckung schränkt jedoch den für den Fahrer relevanten Sichtbereich überhaupt nicht oder zumindest nicht übermäßig ein, was also bevorzugt ist. Die Sicht des Fahrers wird ergo nicht unnötig durch Designelemente beeinflusst. Im Bereich des Steges wird die Sicht des Fahrers allerdings immer eingeschränkt sein. Es geht vielmehr darum, diese Einschränkung weitestgehend zu minimieren.

Eine vorteilhafte Ausführungsform ist auch dadurch gekennzeichnet, dass zumindest ein Gehäuse der Reflexionseinheit, also das erste oder zweite Spiegelgehäuse, in den Tragkörper (vorzugsweise nahtlos) übergeht und/oder optisch direkt an den hohlen Kunststoffkörper (dem Steg) anschließt. Wenn der stegstellende Kunststoffkörper eine Rippe oder mehrere Rippen zur Stabilisierung besitzt, wobei die Rippe(n) in Längsrichtung oder quer (vorzugsweise senkrecht) zur Längsrichtung verläuft/verlaufen, so lässt sich die Stabilität weiter erhöhen, ohne aber die Sicht des Fahrers einzuschränken.

Dabei ist es von Vorteil, wenn der den Steg stellende Kunststoffkörper einen runden, ovalen / ovalartigen, ellipsoiden, polygonalen oder eckigen Querschnitt bzw. derartige bspw. in ihrer Form dazu angenäherte oder kombinierte Geometrien besitzt. Aerodynamische Anforderungen und gesetzliche Anforderungen lassen sich dann einfacher umsetzen.

Darüber hinaus ist es von Vorteil, wenn die Breite des Stegs in einer Frontalansicht oder vom Fahrer des Fahrzeugs aus gesehen einer maximalen Breite des Gehäuses der ersten Reflexionseinheit oder der zweiten Reflexionseinheit in dieser Ansicht entspricht oder zwischen ca. 5%, 10%, 20 %, 30 %, 40% und ca. 95%, 90%, 80%, 70% oder 60% entspricht.

Gemäß einer bevorzugten Ausführungsform kann sich ein Durchmesser des Stegs, insbesondere in einem nicht-sichtbaren Bereich/außerhalb des (sichtbaren) Bereichs bzw. im montierten Zustand durch die Reflexionseinheit(en) für den Fahrer verdeckten Bereich, zu dem ersten Anbindungsbereich und/oder zu dem zweiten Anbindungsbereich hin vergrößern. So kann eine Stabilität des Stegs besonders in den Bereichen vergrößert werden, die keine Bedeutung bezüglich Sichteinschränkung für den Fahrer haben.

Dabei hat es sich bewährt, wenn sich beim Steg über seine Länge gesehen der Durchmesser und/oder die Form verändert. Die Designfreiheit kann dann sinnvoll genutzt werden.

Gemäß einer bevorzugten Ausführungsform kann eine der Steg eine Wandung haben, die den Hohlraum bildet/umschließt. Insbesondere kann die Wandung eine Frontwand, die vorzugsweise im Wesentlichen zu dem ersten und/oder zweiten Anbindungsbereich parallel ausgerichtet ist. Insbesondere kann die Wandung eine Rückwand, die vorzugsweise im Wesentlichen zu dem ersten und/oder zweiten Anbindungsbereich parallel ausgerichtet ist, haben. Insbesondere kann die Wandung eine Seitenwand bzw. zwei Seitenwände, die vorzugsweise im Wesentlichen quer bzw. senkrecht zu dem ersten und/oder zweiten Anbindungsbereich ausgerichtet ist/sind, haben.

Gemäß einer bevorzugten Ausführungsform können/kann die Frontwand und/oder die Rückwand eine Wandstärke ($t2$) haben, die größer ist als eine Wandstärke ($t1$) der Seitenwand bzw. der zwei Seitenwände. So wird eine geeignete Steifigkeit erreicht.

Wenn sich die Wandstärke im Steg entlang der Längsrichtung verändert und/oder in einer Ebene quer zur Längsrichtung unterschiedliche Wandstärken vorhanden sind, so kann zielgerichtet an vorausgewählten Stellen die Stabilität erhöht werden.

Eine vorteilhafte Ausführungsform ist auch dadurch gekennzeichnet, dass der Steg die Anbindungsbereiche und weitere Bereiche der Tragstruktur als einteiliges, einmaterialiges und/oder integrales Bauteil ausgebildet ist.

Wenn die gesamte Tragstruktur als einteiliges, einmaterialiges und integrales Bauteil ausgebildet ist, so kann die Fertigung bzw. die Zeit in der Fertigung verkürzt werden. Alternativ oder kumulativ ist es möglich, mit ursprünglich separaten Anbauteilen oder Einlegeteilen die Tragstruktur zu ergänzen, wie etwa mit metallischen Zusatzbauteilen, beispielsweise Schrauben, Klemmen, Ösen oder Haken.

Gemäß einer bevorzugten Ausführungsform kann der Steg zur Ausbildung des Hohlraums durch zwei stoff-, form- und/oder kraftschlüssig miteinander verbundene Halbschalen gebildet sein. So kann eine geeignete Herstellung gewährleistet werden.

Es ist von Vorteil, wenn eine der Reflexionseinheiten oder beide Reflexionseinheiten eine Verstelleinheit besitzt, etwa aufweisend ein beispielsweise motorisches Stellglied.

Von Vorteil ist es auch, wenn der Steg redundant ausgebildet ist oder ein zweiter Steg an der Tragstruktur zwischen den beiden Anbindungsbereichen vorhanden ist.

Wenn der zweite Steg im Wesentlichen die gleiche Ausrichtung wie der erste Steg besitzt, so lässt sich ein stimmiges optisches Gesamtbild erzeugen.

Zweckmäßig ist es dabei, wenn die beiden Stege geometrisch und in puncto Material ähnlich, gleichartig oder identisch ausgestaltet sind.

Wenn sich durch das Innere des Steges, insbesondere den Hohlraum, eine elektrische Leitung zieht, vorzugsweise in Längsrichtung des Steges verlaufend, so lässt sich die Elektrifizierung der Reflexionseinheit einfach und effizient bewerkstelligen.

Die Erfindung betrifft auch ein Verfahren zum Herstellen des Hohlraums im Steg der erfindungsgemäßen Tragstruktur, wobei ein Kunststoffverarbeitungsverfahren eingesetzt wird, wie ein Wasser- / Gasinnendruckverfahren oder ein schiebereinsetzendes Verfahren. Natürlich ist es denkbar auch diese Verfahren zu kombinieren oder nur partiell einzusetzen.

Dabei ist es von Vorteil, wenn ein Schieber in Richtung eines Anbindungsbereiches verfahren wird oder zwei Schieber verwendet werden, von denen der eine Schieber in Richtung des einen Anbindungsbereiches verfahren wird und der andere Schieber in Richtung des anderen Anbindungsbereiches verfahren wird.

Für eine modulare Fertigung ist es von Vorteil, wenn zwei Halbschalen hergestellt werden, die unter Schaffung eines Stoff-, Form- und/oder Kraftschlusses miteinander verbunden werden.

Mit anderen Worten zeigen sich Weiterbildungen durch mannigfaltige kleine aber wichtige Veränderungen.

So ist es von Vorteil, wenn der wenigstens eine hohle, rohrförmige Kunststoffkörper / Steg den sichtbaren Bereich zwischen den zwei Reflexionseinheiten inklusive deren Gehäuse bildet.

Vorteilhaft ist es, wenn die Gehäuse der Reflexionseinheiten optisch direkt an den hohlen, rohrförmigen Kunststoffkörper anschließen.

Dabei ist es auch von Vorteil, wenn der hohle, rohrförmige Kunststoffkörper Rippen zur Stabilisierung beinhaltet, wobei die Rippen in vorzugsweise Längsrichtung den Hohlkörper durchziehen. An einer Trennstelle von Werkzeugen ist auch ein gefüllter Bereich möglich.

Vorteilhaft ist es ferner, wenn der Hohlkörper einen näherungsweise runden, ovalen oder eckigen Querschnitt aufweist. Die Form wird zwar maßgeblich vom Design des Lichtsystems bestimmt, doch kann die Form auch aerodynamisch in Fahrtrichtung optimiert werden.

Die Form soll möglichst wenig die direkte Sicht des Fahrers verdecken, weshalb es von Vorteil ist, wenn die Breite des Querschnitts des Hohlkörpers in Frontalsicht auf die Reflexionseinheiten maximal der Hälfte der Breite des Gehäuses der Glaseinheiten entspricht.

Wenn der Hohlkörper entlang der Längsrichtung den Durchmesser und/oder die Form des Querschnitts verändert, so zeigen sich diverse Vorteile.

Ferner ist es von Vorteil, wenn der Hohlkörper entlang der Längsrichtung die Wandstärke verändert und/oder der Hohlkörper innerhalb des Querschnitts unterschiedliche Wandstärken aufweist.

Wenn der Hohlkörper im weiteren Bereich der Tragstruktur, insbesondere der Anbindungsbereiche, ein einstückiges Kunststoffteil darstellt, im Extremfall ist die gesamte Tragstruktur ein Kunststoffteil, so stellen sich große Fertigungsvorteile und erhabliche Kostenvorteile ein.

Grundsätzlich ist es natürlich auch möglich, dass die Tragstruktur aus mehreren Teilen gebildet ist. Es sind also auch andere Materialien möglich, insbesondere aber auch nur /ausschließlich Kunststoff. Der Hohlkörper aus Kunststoff bzw. der Steg, aus Kunststoff, der den Hohlkörper stellt, ist evtl. ein Teil von vielen. Der Steg wäre dann ein singuläres, einzelnes Teil.

Wenn in mindestens einem der Anbindungsbereiche die Reflexionseinheiten über eine Verstelleinheit manuell oder elektrisch angebunden sind, so kann Komfortansprüchen des Fahrers entsprochen werden.

Natürlich ist es angedacht, dass der Hohlkörper für die nicht-tragende, nichtstabilisierende Funktion weitere Werkstoffe beinhaltet, beispielsweise an dem Hohlkörper weitere Werkstoffe verbaut bzw. an dem aus Kunststoff gefertigten, den Hohlkörper beinhaltendem Steg, weitere Werkstoffe / Bauteile verbaut sind, wie zum Beispiel Metallklemmen für eine Befestigung von Gehäuseabschnitten.

Zusätzlich zu dem tragenden Hohlkörper kann ein weiterer Steg zur optischen Ausgestaltung an die Tragstruktur integriert sein. Dieser Steg kann hohl, gefüllt und/oder aus anderen Werkstoffen ausgebildet sein. Er kann beispielsweise parallel zum Hohlkörper ausgerichtet sein.

Wenn der mindestens eine Hohlkörper zumindest teilweise von einem Gehäuse umschlossen ist, so ergeben sich weitere Gestaltungsmöglichkeiten.

Natürlich kann der Hohlkörper eine unterbrochene Oberfläche aufweisen, beispielsweise ein Loch in der Oberfläche oder ähnliches, zum Anbringen einer Abdeckung, als Wasserablauf oder zum Durchfädeln von Kabeln.

Es sollte selbstverständlich sein, dass die Reflexionseinheiten zum Abbilden der durch die UN/ECE R46 festgelegten Sichtfelder, insbesondere der Sichtfelder II und IV, ausgebildet ist.

Die Reflexionseinheit soll durch eine Glaseinheit, umfassend beispielsweise eine Glasträgerplatte und ein Spiegelglas, ausgebildet sein.

Es ist von Vorteil, wenn der Hohlkörper so gestaltet ist, dass wenigstens eine elektrische Leitung, beispielsweise ein Kabel für einen Getriebemotor zur Verstellung des Spiegels, einen Temperatursensor oder eine Heizung, durch den Hohlkörper hindurchgeführt wird.

Es ist auch angedacht, dass der nicht sichtbare Übergangsbereich der Tragstruktur zwischen dem Hohlkörper / dem Steg und dem jeweiligen Anwendungsbereich im Querschnitt verbreitert und/oder durch unterstützende Rippen und/oder Querstreben an den Außenseiten des Hohlkörpers verstärkt ist. Ein Abschnitt des Übergangsbereiches kann deswegen nicht sichtbar sein, der durch das Gehäuse der Glaseinheiten verdeckt ist. Der Hohlkörper kann am Rand als Bestandteil des Übergangsbereichs betrachtet sein. Es ist angedacht, dass der Hohlkörper bzw. der Steg auf seiner Außenseite schmäler als die Hälfte der Breite des Gehäuses der Glaseinheiten ist. Wenn die Querstreben an der Außenseite des Hohlkörpers verstärkt sind, kann die Kraftübertragung in die Breite geführt werden. Man ist also nicht mehr durch den schmalen sichtbaren Bereich eingeschränkt.

Wie schon erläutert, betrifft die Erfindung auch ein Verfahren zum Herstellen des Hohlraumes, umfassend, dass zur Herstellung Wasser- oder Gasinnendruckverfahren und/oder Schiebemechanismen im Werkzeug der Tragstruktur verwendet werden, die in eine oder zwei Richtungen der Anbindungsbereiche entformt werden.

Mit anderen Worten betrifft die Erfindung also ein Verfahren zum Herstellen des Hohlraums im Steg der erfindungsgemäßen Tragstruktur, wobei ein Kunststoffverarbeitungsverfahren eingesetzt wird, wie ein Wasseroder Gasinnendruckverfahren oder ein schiebereinsetzendes Verfahren.

Dieses Verfahren kann dadurch weitergebildet werden, dass ein Schieber in Richtung eines Anbindungsbereiches verfahren wird oder zwei Schieber verwendet werden, von denen der eine Schieber in Richtung des einen Anbindungsbereiches verfahren wird und der andere Schieber in Richtung des anderen Anbindungsbereiches verfahren wird.

Wenn zwei Halbschalen hergestellt werden, die unter Schaffung eines Stoff-, Form- und/oder Kraftschlusses miteinander verbunden werden, so kann auf thermische Verbindungsverfahren, wie Vibrationsschweißen, Thermoplast-Verbindungsverfahren, Laserschweiß-Verbindungsverfahren gesetzt werden, genauso wie auf Einschnapp-, Verklemm- oder Verzahnungslösungen. Hier können unterschiedliche Materialien verwendet werden. So ist es beispielsweise beim Laserschweißen von Bedeutung, dass ein Material gegenüber der verwendeten Wellenlänge des Laserlichtes transparent ist.

Auf die Verbindung zwischen den Spiegeln wirkt eine Biegespannung (mit axialem Widerstandsmoment) vor allem aber eine Torsionsspannung. Aus der Definition der Torsionsspannung $\tau$ (idealer Fall eines runden, hohlen Querschnitts mit Außendurchmesser D und Innendurchmesser d)

$$\tau = \frac{M_t}{W_p} = \frac{M_t * 16D}{\pi(D^4 - d^4)}$$

mit dem polaren Widerstandsmoment $W_p$ und dem Torsionsmoment $M_t$, geht hervor, dass diese mit zunehmendem Radius und zunehmender Wandstärke des Hohlkörpers verringert wird. Optimal wäre ein gefüllter, breiter Steg. Hier würde die Torsionsspannung stark verringert. Dies führt allerdings dazu, dass die direkte Sicht des Fahrers (zwischen den Spiegeleinheiten) stark behindert wird und ein ausgefülltes Kunststoffteil führt dazu, dass der Spiegel insgesamt ein deutlich höheres Gewicht annimmt, was zu höheren Materialkosten führt. Ziel ist es also mit den gegebenen Anforderungen der Torsion, eine Lösung zu finden, die dem Fahrer eine gute, direkte Sicht ermöglicht, gleichzeitig allerdings kein zu großes Gewicht besitzt. Ein Hohlkörper aus Kunststoff muss daher so ausgelegt werden, dass die Wandstärke und der Querschnitt groß genug und so gering wie möglich gewählt wird.

In den Bereich hinter dem Spiegelglas kann die Tragstruktur großzügiger im Sinne des Bauraums gestaltet werden, da hier die direkte Sicht des Fahrers nicht weiter eingeschränkt wird. Ein kritischer Bereich der Tragstruktur ist hier der Übergangsbereich an den Rändern des Hohlkörpers zur verbreiterten Tragstruktur hin. Dieser Bereich muss hier deutlich verstärkt sein, beispielsweise mit zusätzlichen Rippen oder Querstreben, da dies sonst eine mögliche Schwachstelle des Systems aufgrund der Kraftübertragung (Spannungen) werden kann.

Durch die Ausgestaltung des Hohlkörpers als sichtbares Teil, ergibt sich damit, dass der Außendurchmesser des Hohlkörpers dem Durchmesser des sichtbaren Teils entspricht und damit die direkte Sicht des Fahrers festlegt. Im bisherigen Stand der Technik umspritzter Metallrohre, muss die tragende Struktur, mit geringem Durchmesser von einem weiteren Gehäuseteilen abgedeckt werden, um ein ansprechendes optisches Erscheinungsbild zu gewährleisten. Damit wird die direkte Sicht des Fahrers durch nicht zur Funktion der Stabilität beitragende Teile verringert. In Sicht des Fahrers möchte man zusammengefasst einen möglichst schmalen Durchmesser der sichtbaren Struktur erzielen.

Darüber hinaus ist in Fahrtrichtung eine schmale, aerodynamische Form wichtig, um das Gesamtsystem aerodynamischer zu gestalten und hierdurch Treibstoff einsparen zu können. Zusätzlich führt dies zu einem deutlichen Kostenvorteil durch Reduzierung des Montageaufwands. Durch die Gestaltung des Verbindungsbereichs aus einem Kunststoff ohne Einschluss von Metall, kann die Recyclingfähigkeit erhöht und somit die Nachhaltigkeit des Produktes gesteigert werden.

Die Erfindung wird nachfolgend mit Hilfe einer Zeichnung näher erläutert. Es zeigen:

Fig. 1          eine erfindungsgemäße Tragstruktur in einer ersten Ausführungsform in einer Draufsicht,

Fig. 2          die Tragstruktur aus Fig. 1 in einer Seitenansicht,

Fig. 3          die Tragstruktur der Fign. 1 und 2 in einer perspektivischen Darstellung,

Fign. 4 bis 8          unterschiedliche Ausführungsformen einer Tragstruktur im Vergleich zu jener der Fign. 1 bis 3,

| Fig. 9 | die Darstellung des Querschnitts IX aus Fig. 4 bzgl. der Verschattung der direkten Sicht des Fahrers, bezogen auf seinen Augpunkt durch den Steg einerseits und das Spiegelglas mit Spiegelkopf andererseits, |
|--------|-----------------|
| Fign. 10 und 11 | unterschiedliche Steggestaltungen bei Darstellung eines Querschnitts entlang der Linie X durch einen Steg nach der Tragstruktur aus Fig. 1 oder ähnlich dazu, |
| Fig. 12 | einen Querschnitt durch den Steg, wobei in der Herstellung zwei Halbschalen eingesetzt sind, |
| Fig. 13 | einen Querschnitt durch die Tragstruktur aus Fig. 1 entlang der Linie XIII in Fig. 1, und |
| Fig. 14 | eine dazu veränderte Ausgestaltung der Tragstruktur bei Anwendung einer schieberverwendenden Fertigung bei Darstellung des in Fig. 13 dargestellten Bereichs. |

Die Figuren sind lediglich schematischer Natur und dienen nur dem Verständnis der Erfindung. Die gleichen Elemente sind mit denselben Bezugszeichen versehen. Merkmale der einzelnen Ausführungsformen können untereinander ausgetauscht werden oder sich ergänzen bzw. sich ersetzen.

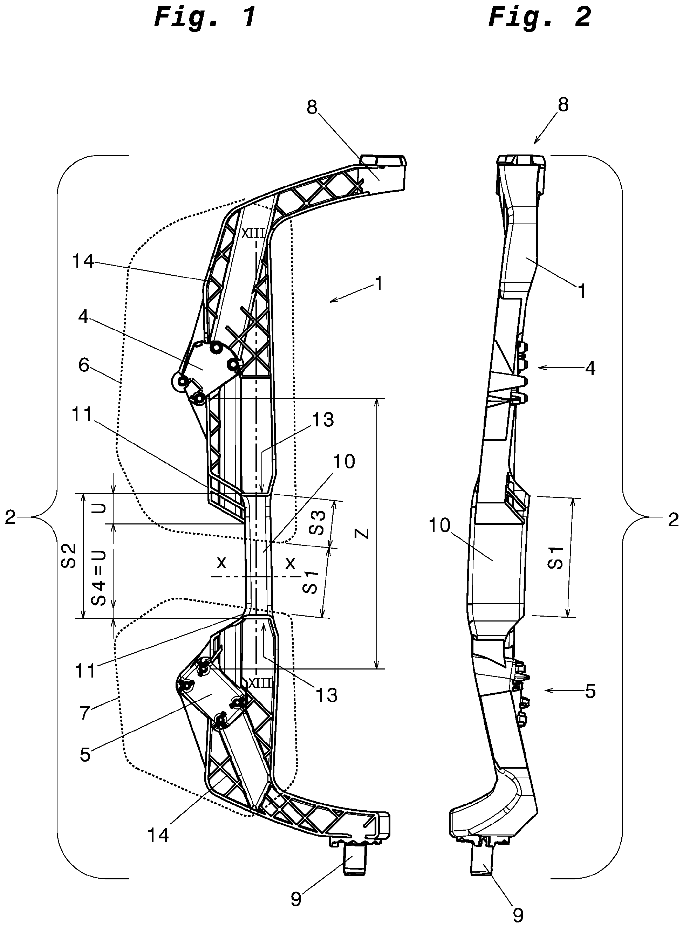

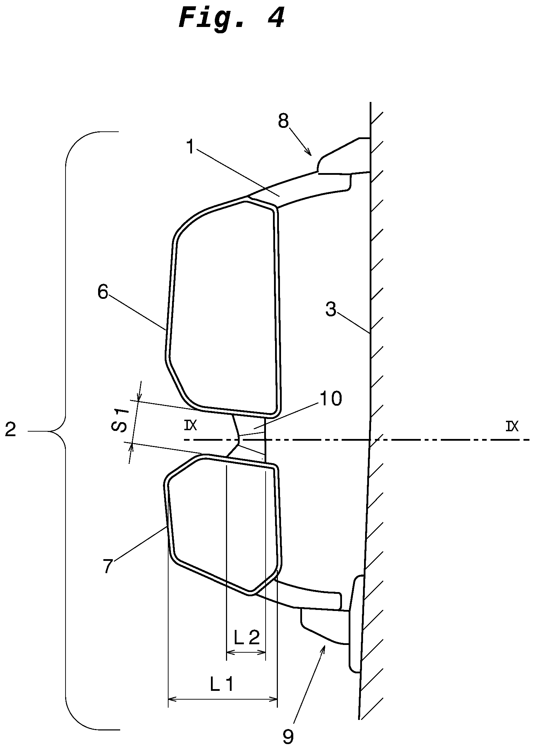

Eine erste Ausführungsform ist in den Fign. 1 bis 3 dargestellt. Dabei zeigt beispielsweise die Fig. 1 eine erfindungsgemäße Tragstruktur 1. Die Tragstruktur 1 ist für ein indirektes Sichtsystem 2 vorgesehen. Es ist zum Verbau an einem Fahrzeug 3, wie es in den Fign. 4 bis 9 angedeutet ist, vorgesehen.

Zurückkommend auf Fig. 1 sei auf einen ersten Anbindungsbereich 4 und einen dazu beabstandeten zweiten Anbindungsbereich 5 verwiesen. Eine gestrichelt dargestellte erste Reflexionseinheit 6 ist zum Anbringen im ersten Anbindungsbereich 4 vorgesehen. Die erste Reflexionseinheit 6 kann eine erste Spiegeleinrichtung sein, aufweisend u.a. ein erstes Spiegelgehäuse und einen ersten Spiegel. Eine ebenfalls gestrichelt dargestellte zweite Reflexionseinheit 7 ist zum Anbringen an dem zweiten Anbindungsbereich 5 vorgesehen. Diese zweite Reflexionseinheit 6, also eine zweite Spiegeleinrichtung, enthält in der Regel u.a. auch ein zweites Spiegelgehäuse und einen zweiten Spiegel. Das erste Spiegelgehäuse kann auch als Abdeckung eines Hauptspiegels bezeichnet werden, wohingegen das zweite Spiegelgehäuse auch als Abdeckung eines Weitwinkelspiegels bezeichnet werden kann.

Es gibt eine obere Schnittstelle 8 und eine untere Schnittstelle 9 zur Anbringung der Tragstruktur 1 am Fahrzeug 3. Zwischen den beiden Anbindungsbereichen 4 und 5 gibt es einen Steg 10. Der Steg 10 erstreckt sich über die Länge S2. Dabei setzt sich diese Länge aus S1 und S3 zusammen. S1 ist die Länge, welche für einen Fahrer sichtbar ist. Dieser sichtbare Bereich des Steges 10 wird ergänzt durch einen durch die Reflexionseinheit 6 oder 7 verdeckten Stegbereich S3.

Der gesamte Abstand von dem ersten Anbindungsbereich 4 zum zweiten Anbindungsbereich 5 ist durch die Länge Z gekennzeichnet. Z ist also größer als S2, wohingegen S2 = S1 + S3 + S4 (zumindest ungefähr) ist.

Darüber hinaus gibt es auch noch einen Übergangsbereich 11. Dieser ist auch mit dem Referenzzeichen U dargestellt. So gibt es einen ersten oberen Übergangsbereich 11, der deutlich größer ist, als ein weiter unten angeordneter zweiter Übergangsbereich 11. Es kann auch gleich groß gestaltet sein. Der untere Übergangsbereich 11 wird auch als S4 bezeichnet. Es ist möglich, aber nicht zwingend, dass in einem Anbindungsbereich Schraublöcher vorhanden sind oder in beiden Anbindungsbereichen 4 und 5 Schraublöcher vorhanden sind, so wie hier realisiert, jeweils vier Schraublöcher. Es geht natürlich auch anders.

Der Steg 10 ist selber becher- oder rohrförmig ausgestaltet und nach Art eines Kunststoffkörpers gestaltet. Üblicherweise besteht der Steg 10 ausschließlich aus Kunststoff. Jedenfalls ist der Steg 10 bzw. der Kunststoffkörper so gestaltet, dass lediglich dessen Kunststoffmaterial die tragende Funktion übernimmt. Es gibt somit keine anderen tragenden Bestandteile, Abschnitte oder Bauteile, die eine tragende Funktion (im Bereich S1) übernehmen würden. Insbesondere wird auf tragende Metallteile verzichtet.

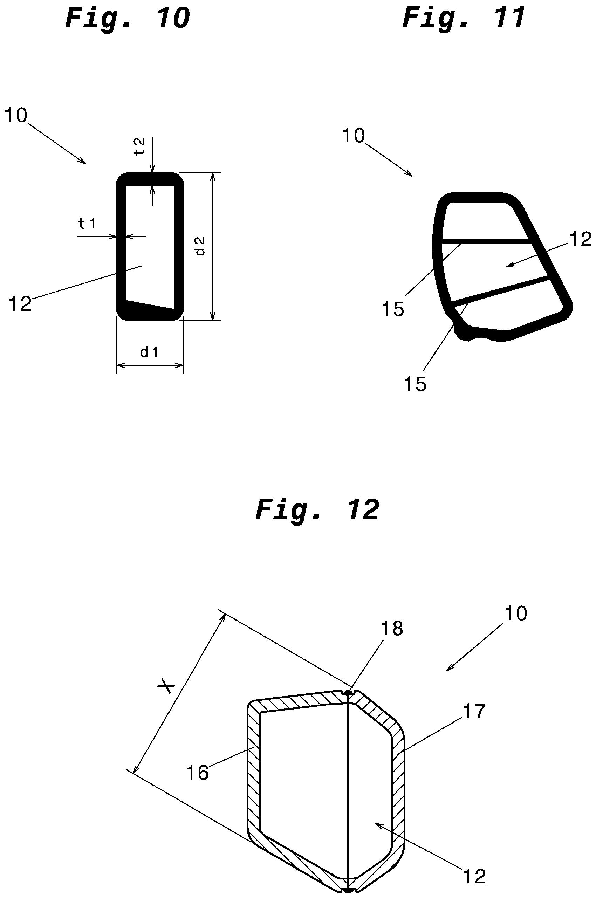

Dadurch, dass der Steg 10 als becher- oder rohrförmiger Kunststoffkörper ausgestaltet ist, ist im Inneren des Steges 10 ein Hohlraum 12 vorhanden, wie er beispielsweise in den Figuren 10, 11, 12, 13 und 14 dargestellt ist.

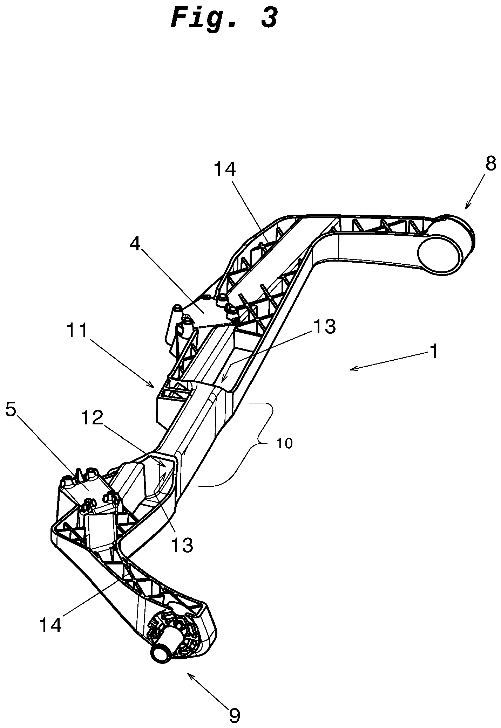

In der Fig. 3 ist die perspektivisch dargestellte Tragstruktur 1 ebenfalls gut zu erkennen. An der Schnittstelle 9 ist vorgesehen, einen Spiegelfuß einzusetzen. Der Steg 10 hat dabei einen Querschnitt, wie in Fig. 10 dargestellt. Er hat eine Breite $d_1$ und eine Tiefe / Höhe $d_2$. Alle vier Wände unterscheiden sich in ihrer Dicke. Insbesondere die linke Seitenwandung mit ihrer Dicke $t_1$ ist ca. halb so dick wie die vordere Seitenwandung $t_2$.

Zurückkommend auf Fig. 3 sei auf eine Öffnung des Hohlraums auf Seiten des zweiten Anbindungsbereichs 5 hingewiesen. Diese Öffnung ist mit dem Bezugszeichen 13 gekennzeichnet. Theoretisch gibt es auch eine weitere Öffnung 13 auf der anderen Seite, also auf Seiten des ersten Anbindungsbereichs 4 des Steges 10. Es gibt Stabilitätserhöhungsrippen 14.

Allerdings gibt es auch im Steg 10, wie in Fig. 11 dargestellt ist, eine oder mehrere Rippen 15, die der Aussteifung und dem Stabilitätsgewinn dienen. Diese Rippen 15 sind aus Kunststoff gefertigt. Sie sind einmaterialige / integrale / einstückige Bestandteile des Steges 10. Es ist auch denkbar, dass der Steg 10 aus einer ersten Halbschale 16 und einer zweiten Halbschale 17 aufgebaut ist, wie in Fig. 12 dargestellt, wobei unter Nutzen von Laserschweißverfahren eine Schweißnaht 18 so eingesetzt wird, dass die beiden Halbschalen 16 und 17 stoffschlüssig unter Schaffung eines zweiteiligen Steges 10, miteinander verbunden sind.

In Fig. 1 ist eine weitere Ausführungsform einer erfindungsgemäßen Tragstruktur 1 mit einem etwas anders gearteten indirekten Sichtsystem dargestellt. Der Steg 10 besitzt dabei eine Hakenform, C-Form, U-, W- oder oder L-Form. Mit L1 ist die Breite der Reflexionseinheit 7 referenziert und mit L2 die (maximale) Breite des sichtbaren Steges 10 referenziert.

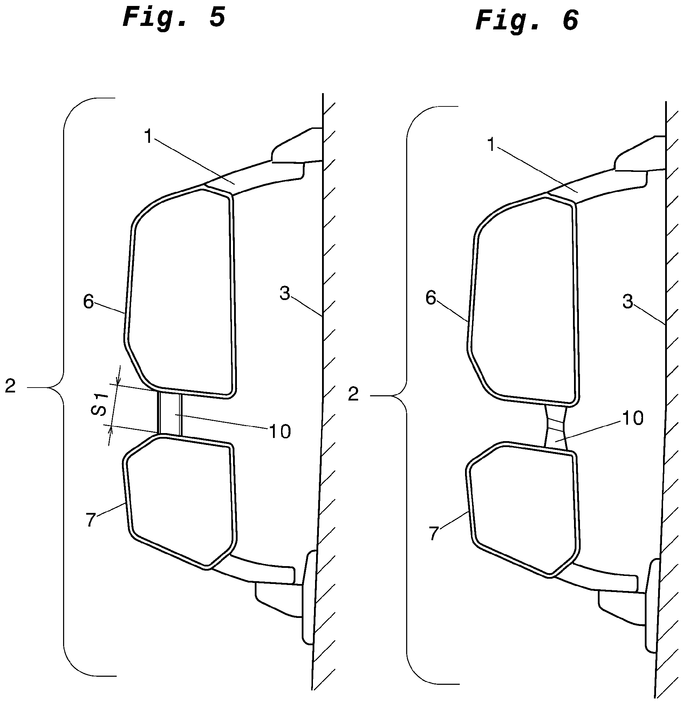

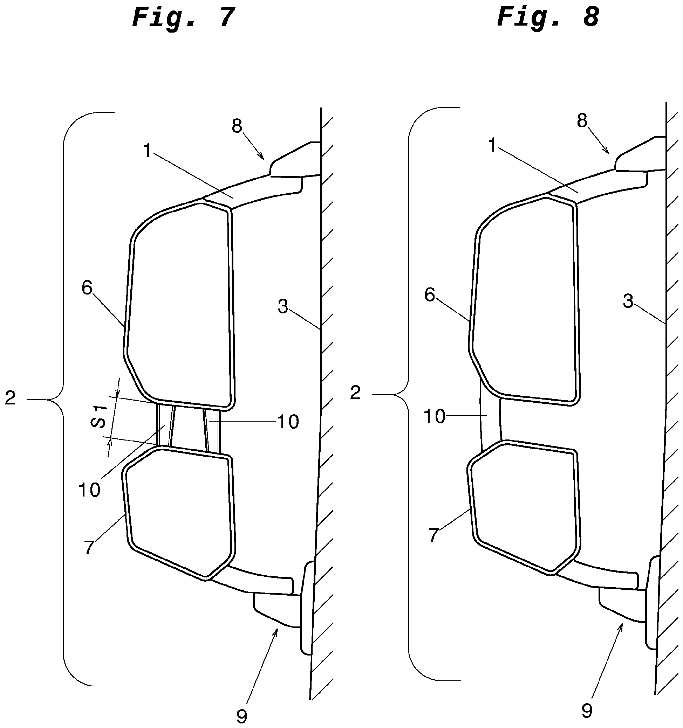

In der Variante der Fig. 5 ist ein Steg 10 mit konstantem Profil, anders als in jener Ausführungsform nach Fig. 4 realisiert. In der Fig. 6 ist wieder eine der Ausgestaltung der Ausführungsform nach 4 ähnliche Gestaltung gewählt, doch mit anderer Geometrie. Während in der Ausführungsform nach Fig. 7 ein doppelter Steg 10 bzw. zwei ähnliche / identische Stege 10 eingesetzt sind, ist in der Ausführungsform nach Fig. 8 ein weiter außenliegender einzelner Steg 10 mit unterschiedlichem Profil eingesetzt.

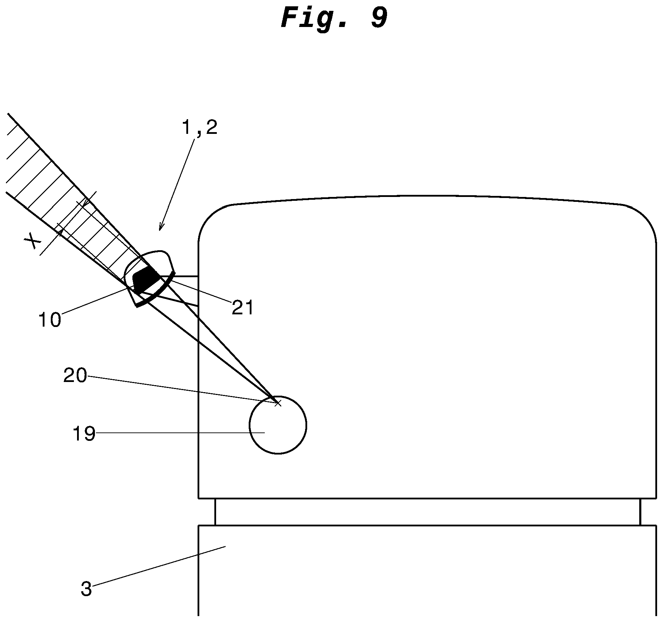

In der Fig. 9 ist jenes mit X referenzierte relevante Maß für die direkte Sicht eines Fahrers 19 mit seinem Augpunkt 20 relevanter Bereich dargestellt. Schraffiert ist dabei ein sogenannter "Verschattungsbereich", bedingt durch die Blick- Undurchlässigkeit des Steges 10 zwischen den beiden Spiegelgläsern 21.

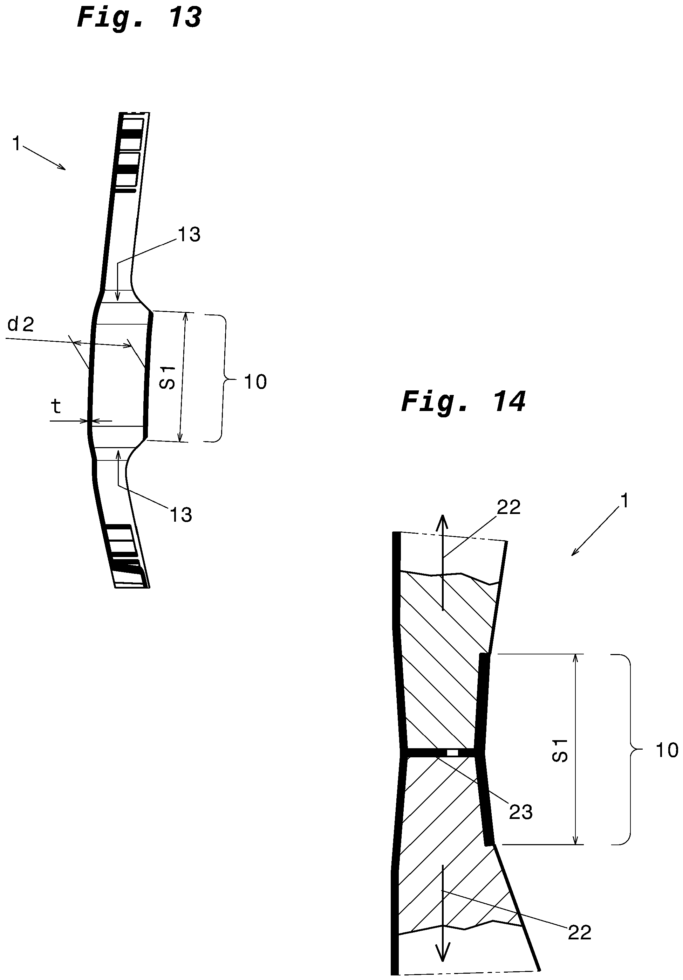

Abschließend seien noch die beiden angedachten Fertigungsverfahren mit Hilfe der Fign. 12, 13 und 14 angesprochen. So setzt die Ausführungsform nach Fig. 14 auf schieberverwendendes Verfahren, wohingegen in der Ausführungsform nach Fig. 13 dies nicht notwendig ist. Die Entformungsrichtung von Werkzeugkernen ist mit den Pfeilen 22 angedeutet. Dabei kann es sein, dass im Inneren des Steges 10 der Hohlraum 12 eine Wandung 23 aufweist, die üblicherweise einen Durchgang oder ein Durchgangsloch / eine Öffnung besitzt.

## Bezugszeichenliste

| | |
|---|---|
| 1 | Tragstruktur / Tragkörper |
| 2 | indirektes Sichtsystem |
| 3 | Fahrzeug |
| 4 | erster Anbindungsbereich |
| 5 | zweiter Anbindungsbereich |
| 6 | erste Reflexionseinheit |
| 7 | zweite Reflexionseinheit |
| 8 | obere Schnittstelle |
| 9 | untere Schnittstelle |
| 10 | Steg |
| 11 | Übergangsbereich |
| 12 | Hohlraum |
| 13 | Öffnung |
| 14 | Stabilitätserhöhungsrippen |
| 15 | Rippen |
| 16 | erste Halbschale |
| 17 | zweite Halbschale |
| 18 | Schweißnaht |
| 19 | Fahrer |
| 20 | Augpunkt |
| 21 | Spiegelglas |
| 22 | Entformungsrichtung |
| 23 | Wandung |

## Patentansprüche

1. Tragstruktur (1) für ein indirektes Sichtsystem (2) für ein Fahrzeug (3), mit einem ersten Anbindungsbereich (4) zum Befestigen einer ersten Reflexionseinheit (6), einem dazu versetzten zweiten Anbindungsbereich (5) zum Befestigen einer zweiten Reflexionseinheit (7), wenigstens einer Schnittstelle (8, 9) zur Anbringung an dem Fahrzeug (3), und mindestens einem zwischen dem ersten Anbindungsbereich (4) und dem zweiten Anbindungsbereich (5) ausgebildeten Steg (10), wobei der Steg (10) rohrförmig ausgebildet ist und einen Hohlraum (12) bildet, wobei die Tragstruktur derart ausgebildet ist, dass in einem an der Tragstruktur (1) montierten Zustand der ersten Reflexionseinheit (6) und der zweiten Reflexionseinheit (7) der Steg (10) in einem Bereich (S1) für einen Fahrer (19) des Fahrzeugs (3) sichtbar ist, **dadurch gekennzeichnet, dass** der Steg (10) vollständig als Kunststoffkörper ausgestaltet ist und als alleinige Tragstruktur zwischen dem ersten Anbindungsbereich (5) und dem zweiten Anbindungsbereich (6) dient.

2. Tragstruktur (1) nach Anspruch 1, **dadurch gekennzeichnet, dass** der Steg (10) in Richtung des ersten Anbindungsbereichs (4) und/oder in Richtung des zweiten Anbindungsbereichs (5) auf einer oder beiden Seiten zumindest teilweise offen ausgestaltet ist.

3. Tragstruktur (1) nach einem der Ansprüche 1 bis 2, **dadurch gekennzeichnet, dass** der Steg (10) als Rohr mit Boden oder als Rohr oder ohne Boden ausgestaltet ist, wobei in dem Boden ein Durchgangsloch ausgebildet ist.

4. Tragstruktur (1) nach einem der Ansprüche 1 bis 2, **dadurch gekennzeichnet, dass** die Oberfläche des Stegs (10) sichtbar ist oder zumindest teilweise oder sogar vollständig von einem Gehäuse umschlossen ist.

5. Tragstruktur (1) nach einem der Ansprüche 1 bis 4, **dadurch gekennzeichnet, dass** zumindest ein Gehäuse der Reflexionseinheit (6, 7) in die Tragstruktur (1) übergeht und/oder optisch direkt an den hohlen Kunststoffkörper anschließt.

6. Tragstruktur (1) nach einem der Ansprüche 1 bis 5, **dadurch gekennzeichnet, dass** der den Steg (10) stellende Kunststoffkörper eine oder mehrere Rippen (15) zur Stabilisierung besitzt, wobei die Rippe(n) (15) in Längsrichtung oder quer zur Längsrichtung verläuft/verlaufen.

7. Tragstruktur (1) nach einem der Ansprüche 1 bis 6, **dadurch gekennzeichnet, dass** der den Steg (10) stellende Kunststoffkörper einen runden, ovalen, ellipsoiden, polygonalen oder eckigen Querschnitt besitzt.

8. Verfahren zum Herstellen des Hohlraums (12) im Steg (10) der Tragstruktur (1) nach einem der vorhergehenden Ansprüche, wobei ein Kunststoffverarbeitungsverfahren eingesetzt wird.

9. Verfahren nach Anspruch 8, **dadurch gekennzeichnet, dass** ein Schieber in Richtung eines Anbindungsbereiches (4 oder 5) verfahren wird oder zwei Schieber verwendet werden, von denen der eine Schieber in Richtung des einen Anbindungsbereiches (4) und der andere Schieber in Richtung des anderen Anbindungsbereiches (5) verfahren wird.

10. Verfahren nach Anspruch 8 oder 9, **dadurch gekennzeichnet, dass** zwei Halbschalen (16, 17) hergestellt werden, die unter Schaffung eines Stoff-, Form- und/oder Kraftschlusses miteinander verbunden werden.

# Fig. 1

# Fig. 2

# Fig. 3

# *Fig. 4*

**Fig. 5**

**Fig. 6**

**Fig. 7**

**Fig. 8**

# Fig. 9

## Fig. 10

## Fig. 11

## Fig. 12

*Fig. 13*

*Fig. 14*

## EUROPÄISCHER RECHERCHENBERICHT

**Nummer der Anmeldung**

EP 25 15 6533

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2021/053492 A1 (BERNE NICOLAS [FR] ET AL) 25. Februar 2021 (2021-02-25) * Absatz [0028] - Absatz [0083]; Abbildungen 1-4 * | 1-10 | INV. B60R1/06 |
| A | US 2016/016516 A1 (LANG WERNER [DE] ET AL) 21. Januar 2016 (2016-01-21) * Absatz [0029] - Absatz [0065]; Abbildungen 1-14 * | 1-10 | |
| A | US 2007/103803 A1 (LANG WERNER [DE] ET AL) 10. Mai 2007 (2007-05-10) * Absatz [0026] - Absatz [0031]; Abbildungen 1, 2 * | 1-10 | |
| A | EP 2 383 148 B1 (MEKRA LANG GMBH & CO KG [DE]) 12. März 2014 (2014-03-12) * Absatz [5061] - Absatz [0061]; Abbildungen 1-4 * | 1-10 | |

**RECHERCHIERTE SACHGEBIETE (IPC)**

B60R

Der vorliegende Recherchenbericht wurde für alle Patentansprüche erstellt

| Recherchenort | Abschlußdatum der Recherche | Prüfer |
|---|---|---|
| Berlin | 24. April 2025 | Ekblom, Henrik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 15 6533

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2025

| Im Recherchenbericht angeführtes Patentdokument | Datum der Veröffentlichung | Mitglied(er) der Patentfamilie | Datum der Veröffentlichung |
|---|---|---|---|
| US 2021053492 A1 | 25-02-2021 | CN 111479722 A | 31-07-2020 |
| | | EP 3735362 A1 | 11-11-2020 |
| | | US 2021053492 A1 | 25-02-2021 |
| | | WO 2019135097 A1 | 11-07-2019 |
| US 2016016516 A1 | 21-01-2016 | BR 102015016880 A2 | 11-07-2017 |
| | | CN 105270265 A | 27-01-2016 |
| | | DE 102014214128 A1 | 21-01-2016 |
| | | EP 2977266 A1 | 27-01-2016 |
| | | ES 2685822 T3 | 11-10-2018 |
| | | KR 20160011168 A | 29-01-2016 |
| | | US 2016016516 A1 | 21-01-2016 |
| US 2007103803 A1 | 10-05-2007 | DE 102005053002 A1 | 10-05-2007 |
| | | US 2007103803 A1 | 10-05-2007 |
| EP 2383148 B1 | 12-03-2014 | CN 102233853 A | 09-11-2011 |
| | | DE 102010028451 A1 | 03-11-2011 |
| | | EP 2383148 A1 | 02-11-2011 |
| | | ES 2459515 T3 | 09-05-2014 |
| | | JP 5511729 B2 | 04-06-2014 |
| | | JP 2011235878 A | 24-11-2011 |
| | | PL 2383148 T3 | 30-09-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011087539 B3
- WO 9735221 A1
- DE 102005053002 B4
- EP 2942235 B1
- EP 1531084 B1
- US 2021053492 A1